# EUROPEAN PATENT APPLICATION

(11) **EP 2 498 330 A1**
(43) Date of publication of application: **12.09.2012**
(21) Application number: 10826861.6
(22) Date of filing: 29.10.2010
(51) Int. Cl.: H01M 14/00, H01L 31/04

(54) **WET SOLAR CELL AND WET SOLAR CELL MODULE**

(30) Priority: 02.11.2009 JP 2009252104
(71) Applicant: Sharp Kabushiki Kaisha, Osaka-shi, Osaka 545-8522 (JP)
(72) Inventor: MUROFUSHI, Norio, Osaka-shi Osaka 545-8522 (JP); FUKUI, Atsushi, Osaka-shi Osaka 545-8522 (JP); YAMANAKA, Ryohsuke, Osaka-shi Osaka 545-8522 (JP)
(74) Representative: Müller - Hoffmann & Partner
(86) International application number: PCT/JP2010/069309
(87) International publication number: WO 2011/052731

(57) **Abstract**

A wet solar cell (1) includes a substrate (2) having a light-receiving surface, a seal portion (11) disposed opposite to the substrate (2), a first electrode (3) formed on the top surface of a side of the substrate (2) that is opposite to the seal portion (11), an insulating frame (10) disposed between the first electrode (3) and the seal portion (11) to surround four sides so that a space is formed inside the insulating frame, a photoelectric conversion portion (5) formed on a top surface of the first electrode (3), and a second electrode (9) formed to extend toward the seal portion (11) from a top surface of another first electrode (3) adjacent to the first electrode (3) and having a top surface partially located opposite to the seal portion (11). In the space, a gap communicating with the portion between the insulating frame (10) and the photoelectric conversion portion (5) is formed between the second electrode (9) and the seal portion (11). This configuration enables the whole of the solar cell to be filled sufficiently with an electrolytic solution in a short time, and improvement of the photovoltaic performance of the solar cell (1).

## Description

### TECHNICAL FIELD

The present invention relates to a wet solar cell and a wet solar cell module.

### BACKGROUND ART

As an energy source to replace the fossil fuel, the solar cell capable of converting solar radiation into electric power is being of interest. Currently, some solar cells in which a crystalline silicon substrate is used as well as some thin-film silicon solar cells begin to be commercialized.

The solar cell in which a crystalline silicon substrate is used has a problem that the cost required for manufacturing the silicon substrate is high. The thin-film silicon solar cell has a problem that the need for different gases to be used for manufacturing a semiconductor or the need for a complicated apparatus increases the manufacturing cost. Regarding both solar cells, the photoelectric conversion efficiency has been enhanced in an attempt to reduce the cost per output power. The above-described problem of the manufacturing cost, however, has not yet been overcome.

Japanese Patent Laying-Open No. 1-220380 (PTL 1) discloses, as a new-type solar cell, a wet solar cell to which photoinduced electron transfer in a metal complex is applied. In the wet solar cell disclosed in Japanese Patent Laying-Open No. 1-220380, two glass substrates have respective electrodes formed thereon. Between the electrodes, a photoelectric conversion portion, which is a metal oxide semiconductor on which a dye is adsorbed, and an electrolytic solution portion are arranged. The photoelectric conversion portion has the absorption spectrum of the visible light region.

In the wet solar cell, visible light entering the photoelectric conversion portion causes electrons to be generated, and the generated electrons move to one electrode. The electrons having moved to the electrode passes through an external electrical circuit, and thereafter moves through the other electrode opposite to the one electrode to reach the electrolytic solution portion. Further, the electrons are carried by ions in the electrolytic solution to be returned to the photoelectric conversion portion. In this way, electrical energy is obtained from the wet solar cell.

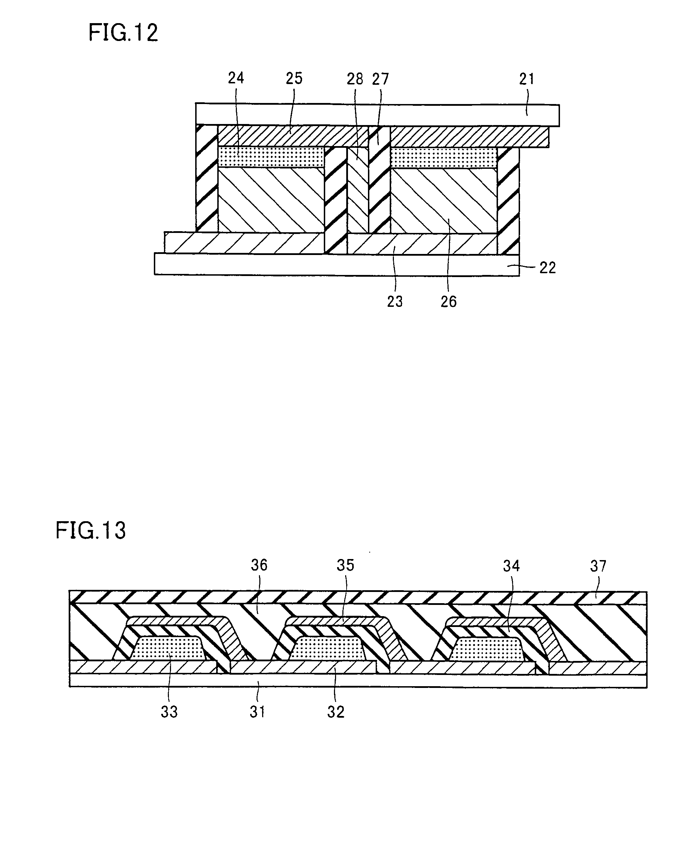

Japanese Patent Laying-Open No. 2001-357897 (PTL 2) discloses a dye-sensitized solar cell module in which a plurality of photoelectric conversion devices are connected in series. Fig. 12 is a cross section schematically showing the structure of the dye-sensitized solar cell module disclosed in Japanese Patent Laying-Open No. 2001-357897.

As shown in Fig. 12, the dye-sensitized solar cell module disclosed in Japanese Patent Laying-Open No. 2001-357897 includes a transparent conducting film (collecting electrode) 25 that is patterned in the shape of a strip and formed on the top surface of one glass substrate 21. On the top surface of transparent conducting film 25, a photoelectric conversion portion 24 formed of a titanium oxide layer on which a dye is adsorbed is formed. On the top surface of the other glass substrate 22, a platinum layer is divided into strips to form a counter electrode 23.

Two glass substrates 21, 22 are bonded together and an electrolytic solution is injected between glass substrate 21 and glass substrate 22 to thereby form a carrier transport portion 26. The outer periphery of the portion between glass substrate 21 and glass substrate 22 is sealed with a resin. In this way, on the same glass substrate, a dye-sensitized solar cell module having a plurality of photoelectric conversion devices is formed.

In this dye-sensitized solar cell module, transparent conducting film 25 of one photoelectric conversion device and counter electrode 23 of another photoelectric conversion device adjacent to the former photoelectric conversion device are electrically connected by a conductive connecting portion 28. Consequently, the photoelectric conversion devices are connected in series. In order to prevent conductive connecting portion 28 from contacting carrier transport portion 26, an insulating protection 27 is formed on both sides of conductive connecting portion 28 between the photoelectric conversion devices adjacent to each other. Such a series-connection structure is generally called Z-type structure.

WO97/16838 (PTL 3) discloses a dye-sensitized solar cell module having another Z-type structure. Fig. 13 is a cross section schematically showing the structure of the dye-sensitized solar cell module disclosed in WO97/16838.

As shown in Fig. 13, in the dye-sensitized solar cell module disclosed in WO97/16838, a transparent conducting film (collecting electrode) 32 patterned in the shape of a strip is formed on the top surface of a glass substrate 31. On the top surface of transparent conducting film 32, a photoelectric conversion portion 33 made of porous titanium oxide on which a dye is adsorbed is formed. A porous insulating portion 34 containing an electrolyte is formed to cover photoelectric conversion portion 33. On the top surface of porous insulating portion 34, a counter electrode 35 is formed.

The periphery of the above-described layered structure is covered with an insulating portion 36. On the top surface of insulating portion 36, an insulating top cover 37 is placed. In this dye-sensitized solar cell module, each counter electrode 35 is connected to transparent conducting film 32 on which formed photoelectric conversion portion 33 adjacent to photoelectric conversion portion 33 opposite to counter electrode 35. Accordingly, the photoelectric conversion devices are connected in series.

Japanese Patent Laying-Open Nos. 2006-244954 (PTL 4) and 2005-235725 (PTL 5) each disclose a dye-sensitized solar cell module in which strip-shaped dye-sensitized solar cells are connected in series. In the dye-sensitized solar cell module disclosed in Japanese Patent Laying-Open Nos. 2006-244954 and 2005-235725, a plurality of strip-shaped dye-sensitized solar cells are arranged in the stripe form, and the dye-sensitized solar cells are connected in series.

Japanese Patent Laying-Open No. 2007-59181 (PTL 6) discloses a seal structure for an optical device such as dye-sensitized solar cell. In the seal structure disclosed in Japanese Patent Laying-Open No. 2007-59181, an opening communicating with an end of an electrolyte layer is provided, and an electrolytic solution is injected through this opening.

Japanese Patent Laying-Open No. 2006-269168 (PTL 7) discloses a photoelectric conversion device for which short circuit between a photoelectric conversion portion and a counter electrode is prevented and deformation of the counter electrode is also prevented. In the photoelectric conversion device disclosed in Japanese Patent Laying-Open No. 2006-269168, the photoelectric conversion portion and the counter electrode are formed respectively on separate substrates. A charge transport layer is provided between the photoelectric conversion portion and the counter electrode to thereby mechanically fix the space between the photoelectric conversion portion and the counter electrode. Thus, the photoelectric conversion portion and the counter electrode are prevented from being short-circuited.

### CITATION LIST

### PATENT LITERATURE

PTL 1: Japanese Patent Laying-Open No. 1-220380
PTL 2: Japanese Patent Laying-Open No. 2001-357897
PTL 3: WO97/16838
PTL 4: Japanese Patent Laying-Open No. 2006-244954
PTL 5: Japanese Patent Laying-Open No. 2005-235725
PTL 6: Japanese Patent Laying-Open No. 2007-59181
PTL 7: Japanese Patent Laying-Open No. 2006-269168

### SUMMARY OF INVENTION

### TECHNICAL PROBLEM

Regarding the dye-sensitized solar cell modules disclosed in Japanese Patent Laying-Open Nos. 2006-244954 and 2005-235725, in the case where the area of a dye-sensitized solar cell is to be increased, the strip-shaped dye-sensitized solar cell will be made longer.

In a dye-sensitized solar cell having a large area, in the case where an electrolytic solution is injected from an end of the electrolyte layer, as done in the seal structure disclosed in Japanese Patent Laying-Open No. 2007-59181, it will take a long time for the electrolytic solution to spread across the whole dye-sensitized solar cell. Specifically, it takes a long time to reduce the pressure in the dye-sensitized solar cell to be filled with the electrolytic solution and it also takes a long time to fill the inside of the dye-sensitized solar cell with the electrolytic solution. If the whole dye-sensitized solar cell is not sufficiently filled with the electrolytic solution, the photoelectric conversion efficiency of the dye-sensitized solar cell will decrease.

As for the photoelectric conversion device disclosed in Japanese Patent Laying-Open No. 2006-269168, short circuit is prevented by securing the space between the photoelectric conversion portion and the counter electrode. The photoelectric conversion portion and the counter electrode, however, are formed on respective substrates different from each other. In such a case where a space is provided between the photoelectric conversion portion and the counter electrode, the positional mismatching of the two substrates that occurs when the substrates are bonded together will reduce the fill factor and also deteriorate the photovoltaic performance of the dye-sensitized solar cell.

The present invention has been made in view of the problems above, and an object of the invention is to provide a wet solar cell and a wet solar cell module having the photovoltaic performance of the solar cell improved by the fact that the whole of the solar cell having a large area can sufficiently be filled with an electrolytic solution in a short time.

### SOLUTION TO PROBLEM

A wet solar cell according to the present invention includes a substrate having a light-receiving surface, a seal portion disposed opposite to the substrate, and a first electrode formed on a top surface of a side of the substrate that is opposite to the seal portion. The wet solar cell also includes an insulating frame disposed between the first electrode and the seal portion to surround four sides so that a space is formed inside the insulating frame, and a photoelectric conversion portion formed on a top surface of the first electrode and spaced from the insulating frame in the space. The wet solar cell further includes a second electrode formed in the space to extend toward the seal portion from a top surface of another first electrode adjacent to the first electrode, and having a top surface partially located opposite to the seal portion. The wet solar cell further includes a porous insulating portion disposed between the photoelectric conversion portion and the second electrode to provide electrical insulation between the photoelectric conversion portion and the second electrode and between the first electrodes adjacent to each other. In the space, a gap communicating with a portion between the insulating frame and the photoelectric conversion portion is formed between the second electrode and the seal portion. In the wet solar cell, the inside of the space including the gap is filled with a carrier transport portion.

In the above-described wet solar cell, the portion between the insulating frame and the photoelectric conversion portion communicates with the gap formed between the second electrode and the seal portion. Therefore, when the solar cell is to be filled with the carrier transport portion, the gap serves as a flow path for air, and the pressure in the wet solar cell can easily be reduced. Further, when the solar cell is to be filled with the carrier transport portion, the gap serves as a flow path for the carrier transport portion, and the inside of the wet solar cell can easily be filled with the carrier transport portion. Thus, in a wet solar cell having a large area, the inside of the wet solar cell can be filled sufficiently with the carrier transport portion in a short time.

Moreover, in the above-described wet solar cell, the photoelectric conversion portion and the second electrode are formed on the same substrate. Therefore, when the wet solar cell is to be sealed with the seal portion, respective positions of the photoelectric conversion portion and the second electrode relative to each other are maintained and, in this state, the inside of the wet solar cell can be filled sufficiently with the carrier transport portion. In this way, the photovoltaic performance of the wet solar cell can be improved.

Regarding the wet solar cell according to the present invention, the gap may be formed by protrusions and depressions on a top surface of the second electrode.

In the above-described wet solar cell, in the state where the protrusion of the second electrode contacts the seal portion, a gap is formed between the depression of the second electrode and the seal portion. Thus, the gap can be secured between the second electrode and the seal portion. In this case, the above-described gap can be secured without providing another component. It is therefore unnecessary to increase the number of components of the wet solar cell, and increase in manufacturing cost of the wet solar cell can be avoided.

Regarding the wet solar cell according to the present invention, the gap may be formed by a spacer formed on a top surface of the second electrode.

In the above-described wet solar cell, in the state where the spacer formed on the top surface of the second electrode contacts the seal portion, a gap is formed between the second electrode and the seal portion. Thus, the gap can be secured between the second electrode and the seal portion. In this case, the thickness of the spacer can be used to flexibly set the width of the gap.

Regarding the wet solar cell according to the present invention, the spacer may be made up of a pattern of a plurality of linear portions, as seen in a plan view, formed on the top surface of the second electrode. In this case, in the state where a protruded portion of the line-pattern spacer and the seal portion contact each other, a gap can be secured between the second electrode and the seal portion.

Regarding the wet solar cell according to the present invention, the spacer may be made up of a pattern of a plurality of dots, as seen in a plan view, formed on the top surface of the second electrode. In this case, in the state where a protruded portion of the dot-pattern spacer and the seal portion contact each other, a gap can be secured between the second electrode and the seal portion.

Regarding the wet solar cell according to the present invention, the spacer may be made up of a pattern of rectangles, as seen in a plan view, formed at predetermined intervals on the top surface of the second electrode. In this case, in the state where a protruded portion of the rectangle-pattern spacer and the seal portion contact each other, a gap can be secured between the second electrode and the seal portion.

Regarding the wet solar cell according to the present invention, the protrusions and depressions may be formed of a single fine particle or a collection of fine particles. In this case, protrusions and depressions on which the shape of the fine particle is reflected are formed. In the state where the apex of the fine particle and the seal portion contact each other, a gap having a width corresponding to the radius of the fine particle can be secured between the second electrode and the seal portion.

In a wet solar cell module according to the present invention, a plurality of wet solar cells including the wet solar cell as described above are connected to each other.

While the wet solar cell generally means dye-sensitized solar cell, the present invention has its technical feature in the structure that facilitates reduction of the pressure in the solar cell as well as filling of the inside of the solar cell with a liquid such as carrier transport portion. Therefore, the wet solar cell is herein a concept encompassing various solar cells such as various compound solar cells, and various organic and quantum dot solar cells that require the process of reducing the pressure and filling with a liquid such as carrier transport portion.

### ADVANTAGEOUS EFFECTS OF INVENTION

In accordance with the present invention, the void between the insulating frame and the photoelectric conversion portion communicates with the gap formed between the second electrode and the seal portion. Therefore, when the solar cell is to be filled with the carrier transport portion, the gap functions as a flow path for air. Accordingly, the pressure in the wet solar cell can easily be reduced. Further, when the solar cell is to be filled with the carrier transport portion, the gap serves as a flow path for the carrier transport portion, so that the inside of the wet solar cell can easily be filled with the carrier transport portion. Therefore, for a wet solar cell having a large area, the inside of the wet solar cell can sufficiently be filled with the carrier transport portion in a short time.

Further, in the above-described wet solar cell, the photoelectric conversion portion and the second electrode are formed on the same substrate. Therefore, when the wet solar cell is to be sealed by the seal portion, respective positions relative to each other of the photoelectric conversion portion and the second electrode are maintained and, in this state, the inside of the wet solar cell can sufficiently be filled with the carrier transport portion. The photovoltaic performance of the wet solar cell can thus be improved.

### BRIEF DESCRIPTION OF DRAWINGS

Fig. 1 is a cross section schematically showing a structure of a wet solar cell according to an embodiment of the present invention.
Fig. 2 shows a chemical formula of a first example of a ruthenium-based metal complex dye preferred as a photosensitizing dye in the present embodiment.
Fig. 3 shows a chemical formula of a second example of the ruthenium-based metal complex dye preferred as a photosensitizing dye in the present embodiment.
Fig. 4 shows a chemical formula of a third example of the ruthenium-based metal complex dye preferred as a photosensitizing dye in the present embodiment.
Fig. 5 is a plan view showing a first example of the pattern shape of a spacer in the present embodiment.
Fig. 6 is a plan view showing a second example of the pattern shape of the spacer in the present embodiment.
Fig. 7 is a plan view showing a third example of the pattern shape of the spacer in the present embodiment.
Fig. 8 is a plan view showing a fourth example of the pattern shape of the spacer in the present embodiment.
Fig. 9 is a cross section schematically showing the structure of a wet solar cell in a modification of the present embodiment.
Fig. 10 is a graph showing a relation between the time spent for reduction of the pressure in a wet solar cell and the conversion efficiency of the wet solar cell in Example Experiment 1.
Fig. 11 is a graph showing a relation between the time spent for reduction of the pressure in a wet solar cell and the pressure in the wet solar cell in Example Experiment 2.
Fig. 12 is a cross section schematically showing the structure of a dye-sensitized solar cell module disclosed in Japanese Patent Laying-Open No. 2001-357897.
Fig. 13 is a cross section schematically showing the structure of a dye-sensitized solar cell module disclosed in WO97/16838.

### DESCRIPTION OF EMBODIMENTS

In the following, with reference to the drawings, a description will be given of a wet solar cell and a wet solar cell module in an embodiment according to the present invention.

While the present invention relates generally to the monolithic solar cell in which an electrolytic solution is used, such as dye-sensitized solar cell and quantum dot solar cell, a description in connection with the present embodiment will be given particularly of a monolithic dye-sensitized solar cell as a typical monolithic wet solar cell.

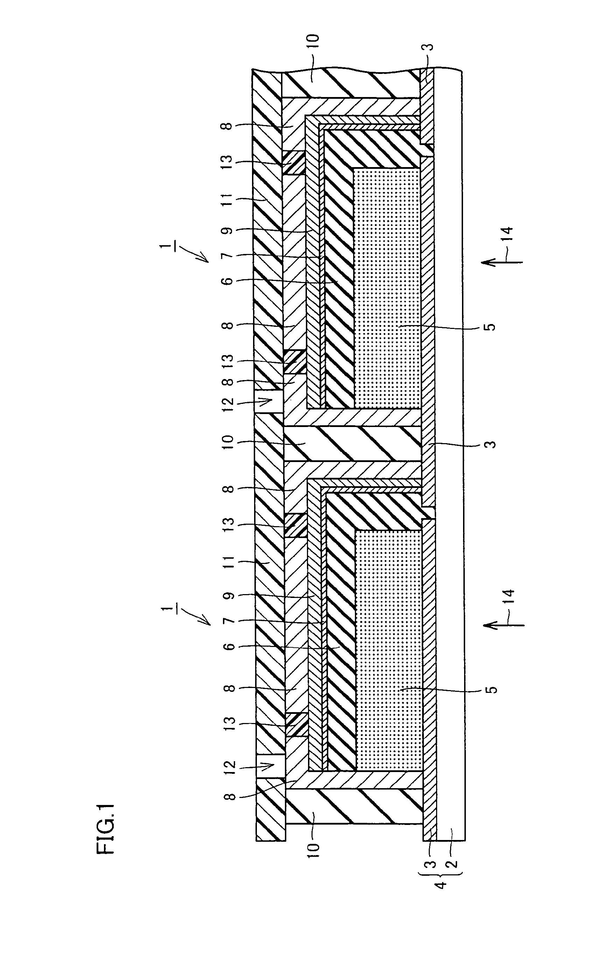

Fig. 1 is a cross section schematically showing a structure of a wet solar cell according to one embodiment of the present invention. As shown in Fig. 1, in wet solar cells 1 of the present embodiment, a plurality of first electrodes 3 are formed on the top surface of a substrate 2 having a light-receiving surface that receives solar light 14. A plurality of first electrodes 3 are formed at predetermined intervals. Substrate 2 and first electrodes 3 constitute a conductive support 4.

A seal portion 11 is disposed on the side opposite to the side where first electrodes 3 of conductive support 4 are formed. Between first electrodes 3 and seal portion 11, an insulating frame 10 is disposed. Insulating frame 10 surrounds the four sides to thereby form a space surrounded by conductive support 4, seal portion 11, and insulating frame 10.

In this space, at a distance from insulating frame 10, a photoelectric conversion portion 5 is formed on the top surface of first electrode 3. In the case of the wet solar cell module in which a plurality of wet solar cells 1 are connected, first electrode 3 is formed to extend on wet solar cells 1 adjacent to each other. In the above-described space, at a distance from insulating frame 10, a second electrode 9 is formed to extend toward seal portion 11 from the top surface of first electrode 3 which is provided to extend from adjacent wet solar cell 1.

In the case where wet solar cell 1 is formed of a single cell, second electrode 9 is formed to extend toward seal portion 11, from the top surface of another first electrode 3 adjacent to first electrode 3 having its top surface on which photoelectric conversion portion 5 is formed. Second electrode 9 extends in a different direction in the vicinity of seal portion 11 and a part of the top surface of second electrode 9 is located opposite to seal portion 11.

Between photoelectric conversion portion 5 and second electrode 9, a porous insulating portion 6 is disposed. Porous insulating portion 6 provides electrical insulation between photoelectric conversion portion 5 and second electrode 9 and between first electrodes 3 adjacent to each other. Between porous insulating portion 6 and second electrode 9, a catalyst portion 7 is formed.

On the top surface of second electrode 9, a spacer 13 is formed. The top surface of spacer 13 contacts the bottom surface of seal portion 11 to thereby secure a gap between second electrode 9 and seal portion 11. In the aforementioned space, the gap communicates with the void between insulating frame 10 and photoelectric conversion portion 5 and communicates with the void between insulating frame 10 and second electrode 9.

In seal portion 11, an opening 12 is formed for injecting an electrolytic solution that is to form a carrier transport portion 8. Opening 12 communicates with the gap between second electrode 9 and seal portion 11. Opening 12 also communicates with the void between insulating frame 10 and photoelectric conversion portion 5 and the void between insulating frame 10 and second electrode 9. The electrolytic solution is injected from opening 12 to spread through the gap and the voids and fill the inside of the above-described space. Opening 12 is sealed with a seal member (not shown) after the space is filled with the electrolytic solution.

Each component of wet solar cell 1 in the present embodiment will hereinafter be described.

### Substrate 2

The material to be used for substrate 2 is not particularly limited as long as the material has a thermal resistance capable of withstanding the process temperature at which a porous semiconductor layer constituting photoelectric conversion portion 5 is formed, as well as electrical insulation and optical transparency for solar light. For example, a glass substrate, a heat-resistant resin plate such as flexible film, or a ceramic substrate may be used.

As to the thermal resistance of substrate 2, in the case for example where the porous semiconductor layer is formed using a paste containing ethyl cellulose, substrate 2 is preferably capable of withstanding a temperature of approximately 500°C. In the case where the porous semiconductor layer is formed using a paste containing no ethyl cellulose, substrate 2 may have a thermal resistance capable of withstanding a temperature of approximately 120°C.

Further, in the case where a volatile solvent is used for carrier transport portion 8, substrate 2 is preferably made of a material having a low moisture permeability for this volatile solvent. More preferably, one of or both surfaces of substrate 2 are coated with a material having a low moisture permeability such as SiO₂.

### First Electrode 3

First electrode 3 has the function of transporting electrons generated in photoelectric conversion portion 5 to an external circuit. As the material forming first electrode 3, a transparent conductive metal oxide such as ITO (indium-tin composite oxide), fluorine-doped tin oxide, boron-doped zinc oxide, zinc oxide doped with gallium or aluminum, or titanium oxide doped with niobium or tantalum may be used. Further, as the material forming first electrode 3, a metal such as gold, silver, aluminum, or indium, or a carbon such as carbon black, carbon whisker, carbon nanotube, or fullerene may be used.

Preferably, as the material forming first electrode 3, a transparent conductive metal oxide is used. In the case where a metal or carbon which is an opaque material is used for first electrode 3, this material is preferably made thin so that it has optical transparency. In the case where a metal corroded by the electrolytic solution used for carrier transport portion 8 is used for first electrode 3, preferably the portion of first electrode 3 that contacts the electrolytic solution is coated with a corrosion-resistant material.

First electrode 3 is formed on the top surface of substrate 2 by the sputtering or spray method. Preferably the film thickness of first electrode 3 is approximately 0.02 µm to 5 µm. A lower film resistance of first electrode 3 is preferred, and the resistance is preferably 40 Ω/sq or less.

Regarding the method of forming a plurality of first electrodes 3 at predetermined intervals on the top surface of substrate 2, a method that patterns first electrode 3, or removes a part of first electrode 3 which has uniformly been formed on the top surface of substrate 2 may be used.

Regarding the method of patterning first electrode 3, photolithography or a method using a metal mask or tape mask for example may be used. As the method for removing a part of first electrode 3, a chemical method such as solution etching, or a physical method such as laser scribing or sand blasting may be used.

### Photoelectric Conversion Portion 5

Photoelectric conversion portion 5 is formed by adsorbing a photosensitizing dye on the porous semiconductor layer.

### Porous Semiconductor Layer

The porous semiconductor layer is made of a semiconductor in a form which may be any of various forms such as particles or film. Preferably, a semiconductor in the form of a film is used. As the material constituting the porous semiconductor layer, one of or a combination of two or more of semiconductors such as titanium oxide and zinc oxide may be used. In terms of conversion efficiency, stability, and safety, titanium oxide is preferably used.

As the method for forming the porous semiconductor layer in the form of a film on the top surface of substrate 2, a method such as screen printing method or inkjet method may be used by which a paste containing semiconductor particles is applied to the top surface of substrate 2 and thereafter fired. In terms of thickening of the film and manufacturing cost, the screen printing method using a paste is preferably used. Here, while the film thickness of the porous semiconductor layer is not particularly limited, preferably the thickness is approximately 5 µm to 50 µm in terms of the conversion efficiency in photoelectric conversion portion 5.

In order to improve the conversion efficiency in photoelectric conversion portion 5, it is necessary to adsorb a larger amount of photosensitizing dye on the porous semiconductor layer. Therefore, the porous semiconductor layer in the form of a film preferably has a large specific surface area. Preferably, the specific surface area is approximately 10 m²/g to 200 m²/g. Here, the values of the specific surface area indicated herein are values measured in accordance with the BET adsorption method.

As the above-described semiconductor particles, particles of a single semiconductor or a compound semiconductor having an average particle size of approximately 1 nm to 500 nm for example may be used.

The above-described porous semiconductor layer is dried and fired under the conditions such as temperature, time, and ambient that are adjusted appropriately depending on the type of substrate 2 or the semiconductor particles to be used. For example, in the atmosphere or an inert gas ambient, the porous semiconductor layer is kept at a temperature of approximately 50°C to 800°C for a period of approximately 10 seconds to four hours, and accordingly dried and fired. It may be dried and fired in one step at a single temperature, or in two or more steps at respective temperatures different from each other.

### Photosensitizing Dye

As the dye which is adsorbed on the porous semiconductor layer to function as a photosensitizer, one of or two or more of various dyes such as organic dyes or metal complex dyes absorbing light in the visible region and/or the infrared region may selectively be used.

As the organic dye, any dye may be used such as azo-based dye, quinone-based dye, quinoneimine-based dye, quinacridone-based dye, squarylium-based dye, cyanine-based dye, merocyanine-based dye, triphenylmethane-based dye, xanthene-based dye, porphyrin-based dye, perylene-based dye, indigo-based dye, and naphthalocyanine-based dye, for example. The absorption coefficient of the organic dye is generally larger than the absorption coefficient of the metal complex dye in the form in which ligand molecules are bonded to a transition metal.

As the metal complex dye, a metal complex in which ligand molecules are bonded to a metal such as Cu, Ni, Fe, Co, V, Sn, Si, Ti, Ge, Cr, Zn, Ru, Mg, Al, Pb, Mn, In, Mo, Y, Zr, Nb, Sb, La, W, Pt, Ta, Ir, Pd, Os, Ga, Tb, Eu, Rb, Bi, Se, As, Sc, Ag, Cd, Hf, Re, Au, Ac, Tc, Te, Rh may be used. Preferably, phthalocyanine-based dye or ruthenium-based dye is used. In particular, a ruthenium-based metal complex dye is preferred.

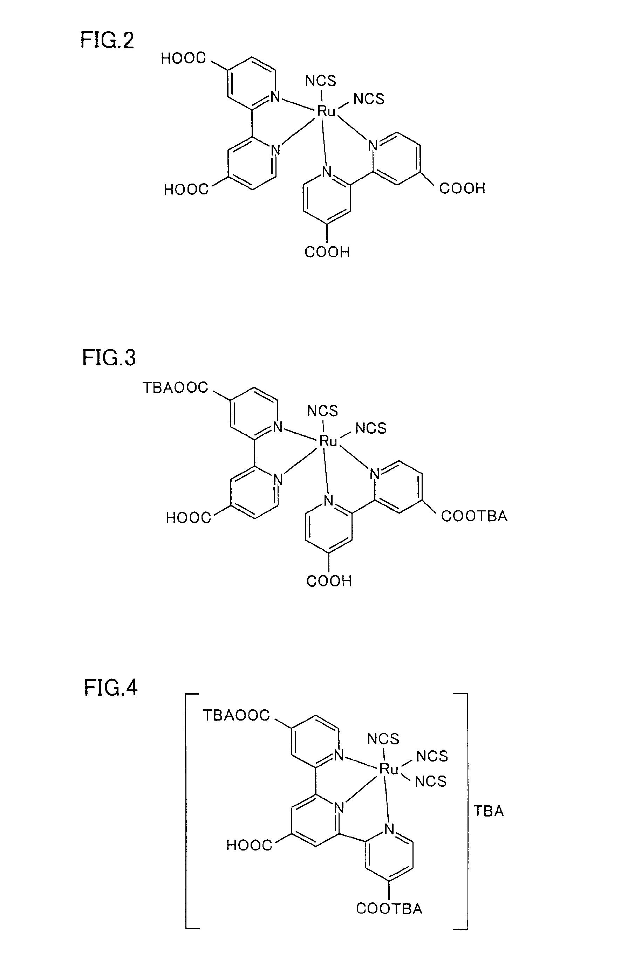

Fig. 2 shows a chemical formula of a first example of the ruthenium-based metal complex dye which is preferred as the photosensitizing dye in the present embodiment. Fig. 3 shows a chemical formula of a second example of the ruthenium-based metal complex dye which is preferred as the photosensitizing dye in the present embodiment. Fig. 4 shows a chemical formula of a third example of the ruthenium-based metal complex dye which is preferred as the photosensitizing dye in the present embodiment. It is particularly preferable to use, as the photosensitizing dye, the ruthenium-based metal complex dyes represented by the chemical formulas shown in Figs. 2 to 4.

Further, in order to firmly adsorb the photosensitizing dye on the porous semiconductor layer, it is preferable that an interlock group such as carboxylic acid group, a carboxylic acid anhydride group, alkoxy group, hydroxyl group, hydroxyalkyl group, sulfonic acid group, ester group, mercapto group, or phosphonyl group is contained in the molecules of the photosensitizing dye. In particular, preferably a carboxylic acid group and a carboxylic acid anhydride group are contained in the molecules of the photosensitizing dye. Here, the interlock group provides electrical coupling that facilitates movement of electrons between the photosensitizing dye in the excited state and the conduction band of the porous semiconductor layer.

As the method for adsorbing the photosensitizing dye on the porous semiconductor layer, a method may be used for example by which the porous semiconductor layer formed on the top surface of first electrode 3 is immersed in a solution in which the photosensitizing dye is dissolved (solution for dye adsorption).

As the solvent dissolving the photosensitizing dye, any solvent that dissolves the photosensitizing dye may be used. Specifically, alcohols such as ethanol, ketones such as acetone, ethers such as diethyl ether or tetrahydrofuran, nitrogen compounds such as acetonitrile, halogenated aliphatic hydrocarbon such as chloroform, aliphatic hydrocarbon such as hexane, aromatic hydrocarbon such as benzene, esters such as ethyl acetate, or water may be used. Two or more of these solvents may be mixed to be used.

The concentration of the photosensitizing dye in the solution in which the photosensitizing dye is dissolved is adjusted appropriately depending on the type of the photosensitizing dye and the type of the solvent to be used. In order to improve the adsorption capability of the solution, a higher concentration of the photosensitizing dye is preferred. For example, the concentration of the photosensitizing dye is preferably 5×10⁻⁴ mol/l or more.

### Porous Insulating Portion 6

Porous insulating portion 6 has the function of preventing physical contact and electrical connection between photoelectric conversion portion 5 and second electrode 9. Porous insulating portion 6 must be capable of taking in the electrolyte (redox species) in carrier transport portion 8 and moving the electrolyte. Therefore, porous insulating portion 6 is preferably a porous body having continuous air babbles in porous insulating portion 6. Further, preferably porous insulating portion 6 has a high refractive index and has the function of reflecting solar light 14 which has passed through photoelectric conversion portion 5, and allowing the light again to enter photoelectric conversion portion 5.

In order to prevent, by porous insulating portion 6, physical contact between photoelectric conversion portion 5 and second electrode 9, porous insulating portion 6 having a predetermined film thickness is formed without gaps on the top surface of photoelectric conversion portion 5. In the case where the film thickness of porous insulating portion 6 is to be increased, deposition for forming a film may be performed twice or more.

As the method for preventing, by porous insulating portion 6, electrical connection between photoelectric conversion portion 5 and second electrode 9, a method may be used by which a high-electrical-resistance material is used as the material constituting porous insulating portion 6, or the contact area between photoelectric conversion portion 5 and second electrode 9 is reduced.

As the high-electrical-resistance material, an oxide semiconductor is preferably used. In particular, one of or a combination of two or more of zirconium oxide, magnesium oxide, aluminum oxide, and titanium oxide is used.

In the case where the contact area where photoelectric conversion portion 5 and second electrode 9 contact each other is to be reduced, it is preferable to reduce the surface area of the surface of porous insulating portion 6. Specifically, a method may be used by which the number of protrusions and depressions on the surface of porous insulating portion 6 is reduced or, in the case where porous insulating portion 6 is formed of a porous body, the size of fine particles forming this portion is increased.

As the method for forming porous insulating portion 6, a method such as screen printing method or inkjet method may be used by which a paste containing semiconductor particles is applied to the top surface of conductive support 4 on which photoelectric conversion portion 5 is formed, and thereafter fired.

### Carrier Transport Portion 8

Carrier transport portion 8 that fills the space surrounded by substrate 2, seal portion 11, and insulating frame 10 is constituted of an electrically conductive material capable of transporting ions, for example, an ionic conductor such as electrolytic solution or polyelectrolyte. The ionic conductor preferably includes a redox electrolyte. As the redox electrolyte, specifically a metal such as iron-based or cobalt-based metal, or a compound of halogen such as chlorine, bromine, or iodine for example is used.

In the case where iodine is used as the redox electrolyte, the iodine is not particularly limited as long as it is used for the common battery and the like. Preferably, a combination of a metal iodide such as lithium iodide, sodium iodide, potassium iodide, or calcium iodide, and iodine is used. Further, imidazole salt such as dimethylpropyl imidazole iodide may be added to iodine.

As the solvent for carrier transport portion 8, a carbonate compound such as propylene carbonate, a nitrile compound such as acetonitrile, alcohol such as ethanol, or water or aprotic polar substance may be used. Preferably, a carbonate compound or nitrile compound is used. A mixture of two or more of these solvents may also be used. In the case where volatilization of the electrolytic solution involves a problem, molten salt may be used instead of the solvent.

The concentration of the redox electrolyte in carrier transport portion 8 is selected as appropriate depending on the type of the electrolyte. The concentration is preferably not less than 0.01 mol/l and not more than 1.5 mol/l.

### Catalyst Portion 7

Catalyst portion 7 has the function of accelerating a reaction of the electrolyte (redox species) which is present in porous insulating portion 6. In the case where catalyst portion 7 is to be formed before adsorption of the photosensitizing dye on the porous semiconductor layer, catalyst portion 7 is preferably formed to have many holes arranged like a mesh, for example, so that adsorption of the photosensitizing dye on the porous semiconductor layer is facilitated. In the case where catalyst portion 7 is to be formed after adsorption of the photosensitizing dye on the porous semiconductor layer, the form of catalyst portion 7 is not particularly limited. Further, catalyst portion 7 is preferably formed of a porous body so that the area where it contacts the redox species is larger.

As the material forming catalyst portion 7, a Group VIII element such as Fe, Co and platinum group including Ru, Rh, Pd, Os, Ir, and Pt, a carbon such as carbon black, ketjen black, carbon nanotube, or fullerene, or PEDOT/PSS(H) for example is used. In the case where a highly-corrosive halogen-based redox species is to be used as the material forming carrier transport portion 8, a carbon compound or platinum which is a material having high corrosion resistance is preferably used in terms of the long-lasting stability of catalyst portion 7. The method for forming catalyst portion 7 is not particularly limited, and the electron beam vapor deposition or sputtering for example may be used.

### Second Electrode 9

Second electrode 9 has the function of electrically connecting catalyst portion 7 of a first wet solar cell 1 and first electrode 3 of a second wet solar cell 1 adjacent to the first wet solar cell 1. The material which forms second electrode 9 is not particularly limited, and a metal or transparent conductive material having high electrical conductivity may be used. Here, in the case where a highly-corrosive halogen-based redox species is to be used as carrier transport portion 8, a material having high corrosion resistance, such as refractory metal like Ti or Ta for example is preferably used as second electrode 9, in terms of the long-term stability of second electrode 9.

Since second electrode 9 contacts carrier transport portion 8, second electrode 9 is formed preferably of a material other than the material accelerating a redox reaction, such as carbons and the platinum group. This is for the following reason. In the case where a redox reaction occurs between second electrode 9 and carrier transport portion 8, internal short circuit occurs. Therefore, preferably one of or a combination of two or more of Ti, Ni, Au, and compounds (including alloys) thereof, for example, is used to form second electrode 9.

In the case where second electrode 9 is to be formed before adsorption of the photosensitizing dye on the porous semiconductor layer, second electrode 9 is preferably formed in the shape having many holes like a mesh in order to facilitate adsorption of the photosensitizing die on the porous semiconductor layer. In the case where second electrode 9 is to be formed after adsorption of the photosensitizing dye on the porous semiconductor layer, the shape of second electrode 9 is not particularly limited. The method for forming second electrode 9 is not particularly limited, and electron beam vapor deposition or sputtering for example may be used.

Spacer 13 is formed on the top surface of second electrode 9. For example, a photosensitive resin may be applied with a dispenser to form spacer 13 on the top surface of second electrode 9. As another method, after second electrode 9 is formed, a pattern of a glass frit may be formed on the top surface of second electrode 9 by means of the screen printing method to thereby form spacer 13.

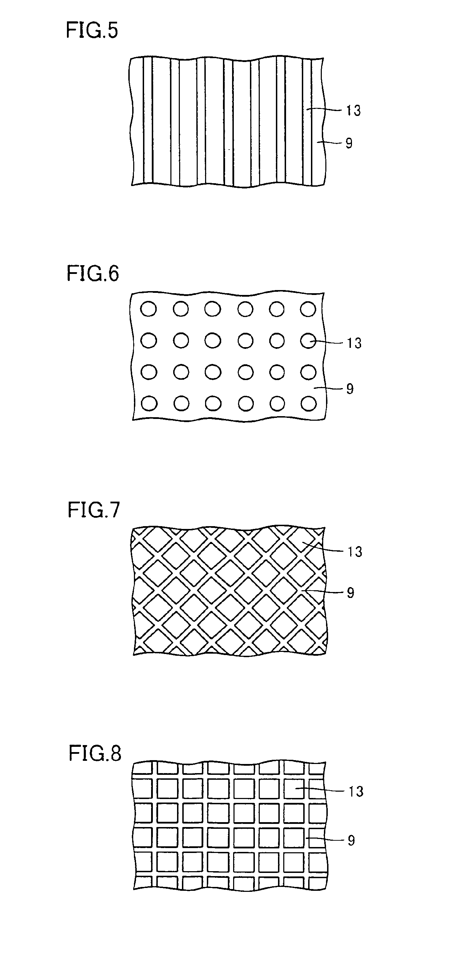

Fig. 5 is a plan view showing a first example of the pattern shape of the spacer in the present embodiment. Fig. 6 is a plan view showing a second example of the pattern shape of the spacer in the present embodiment. Fig. 7 is a plan view showing a third example of the pattern shape of the spacer in the present embodiment. Fig. 8 is a plan view showing a fourth example of the pattern shape of the spacer in the present embodiment.

As shown in Fig. 5, spacer 13 of the first example is formed in the shape of straight lines arranged in parallel at predetermined intervals on the top surface of second electrode 9. In this case, a gap is secured between the straight lines of spacer 13. As shown in Fig. 6, spacer 13 of the second example is formed in the shape of dots arranged at predetermined intervals on the top surface of second electrode 9. In this case, a gap is secured between the dots of the spacer 13.

As shown in Fig. 7, spacer 13 of the third example is formed in the shape of rectangles arranged at predetermined intervals on the top surface of second electrode 9. In this case, a gap is secured between the rectangles of spacer 13. In the case of the third example, spacer 13 is arranged so that the top surface of second electrode 9 has the shape of a mesh. As shown in Fig. 8, spacer 13 of the fourth example is formed in the shape of rectangles arranged at predetermined intervals on the top surface of second electrode 9. In this case as well, like spacer 13 of the third example, a gap is secured between the rectangles of spacer 13. In the case of the fourth example, spacer 13 is arranged so that the top surface of second electrode 9 has the shape of a grid.

Spacers 13 of the first to fourth examples are preferably formed so that the thickness is 0.1 µm or more. Namely, the width of the gap between the top surface of second electrode 9 and seal portion 11 is preferably 0.1 µm or more. In the case where spacer 13 is provided, the thickness of spacer 13 can be used to flexibly define the width of the gap. The width of the gap can be increased to further facilitate reduction of the pressure in wet solar cell 1, and fill the inside of the solar cell with carrier transport portion 8 in a short time.

In the case of spacer 13 of the first example, the gap between the top surface of second electrode 9 and seal portion 11 includes a region which is easily filled with carrier transport portion 8 and a region which is not easily filled with carrier transport portion 8, depending on the orientation of linear spacer 13. Thus, protrusions and depressions may be formed on the top surface of spacer 13. In this case, the depressed portion formed on the top surface of spacer 13 provides a flow path of carrier transport portion 8. Accordingly, the influence of the orientation of linear spacer 13 can be lessened to uniformly fill the inside with the carrier transport portion. In the case where protrusions and depressions are to be formed on the top surface of spacer 13 made of a resin, spacer 13 having protrusions and depressions on the top surface can be formed by appropriately changing the opening diameter of the nozzle and adjusting the flow rate. Specifically, in the case where the protrusion is to be formed, the opening diameter of the nozzle is increased to discharge a greater amount of the resin and, in the case where a depressed portion is to be formed, the opening diameter of the nozzle is decreased to discharge a smaller amount of the resin.

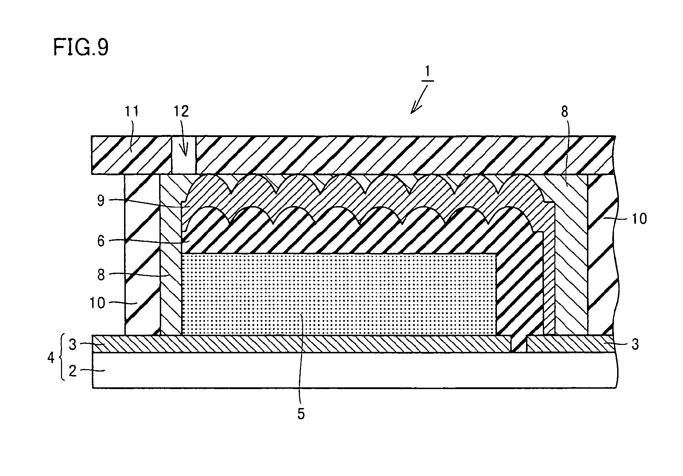

Fig. 9 is a cross section schematically showing a structure of a wet solar cell of a modification in the present embodiment. As shown in Fig. 9, in the wet solar cell of the modification, protrusions and depressions are formed on the top surface of second electrode 9. The protrusions and depressions function as a spacer to secure a gap between second electrode 9 and seal portion 11.

In order to form protrusions and depressions on the top surface of second electrode 9, zirconium oxide having a particle size of 400 nm to 500 nm for example is used to form porous insulating portion 6. In this case, as shown in Fig. 9, on the top surface of porous insulating portion 6, protrusions and depressions on which the particle size of zirconium oxide is reflected are formed.

On the top surface of this porous insulating portion 6, Ti or the like is vapor-deposited for example to form second electrode 9. Second electrode 9 can be formed in this way to form protrusions and depressions on the top surface of second electrode 9. Preferably, protrusions and depressions are formed so that the surface roughness Ra of the top surface of second electrode 9 is not less than 0.01 µm and not more than 10 µm.

Thus, the protrusions and depressions of the top surface of second electrode 9 may be formed of a single fine particle or a collection of fine particles. In this case, protrusions and depressions on which the shape of the fine particle is reflected are formed. In the state where the apex of the fine particle and seal portion 11 contact each other, a gap having the width corresponding to the radius of the fine particle can be secured between second electrode 9 and seal portion 11. In this case, the gap can be secured without providing another component. Therefore, it is unnecessary to increase the number of components of wet solar cell 1, and increase of the manufacturing cost can be avoided.

### Insulating Frame 10

Insulating frame 10 has the function of blocking movement of the redox species in carrier transport portion 8. Insulating frame 10 also has the function of preventing internal short circuit, since second electrode 9 in wet solar cell 1 contacts first electrode 3 which is different from first electrode 3 connected to second electrode 9.

Between substrate 2 and seal portion 11, first electrode 3 having a different potential is present. Therefore, in order to prevent the redox species from unevenly distributing in carrier transport portion 8, insulating frame 10 partitions wet solar cells 1. As a result, the redox species in carrier transport portion 8 is prevented from moving between wet solar cells 1 adjacent to each other.

Preferably, insulating frame 10 is formed of a dense film to the extent that the redox species in carrier transport portion 8 cannot pass through insulating frame 10. The dense film refers to any film through which the redox species cannot pass between wet solar cells 1 adjacent to each other, and includes for example a porous body having independent air babbles.

Further, in order to avoid occurrence of internal short circuit due to electrical conduction between first electrodes 3 adjacent to each other, insulating frame 10 is formed of an electrically insulating material between first electrodes 3 adjacent to each other. As shown in Fig. 1, insulating frame 10 is disposed so that the two sides of insulating frame 10 extends perpendicularly to the plane of the drawing of Fig. 1.

As the insulating material which forms insulating frame 10, an inorganic oxide that generally has a high electrical resistance is preferred. For example, a material such as silicon oxide, boron oxide, zinc oxide, lead oxide, bismuth oxide, titanium oxide, aluminum oxide, or magnesium oxide may be used as insulating frame 10. As the method for forming insulating frame 10, a method may be used by which a paste containing semiconductor particles is applied by means of the screen printing method, inkjet method, or the like, on the top surface of conductive support 4 and thereafter firing the paste.

### Seal Portion 11

Seal portion 11 has the function of preventing volatilization of the electrolytic solution in carrier transport portion 8 and preventing water or the like from entering the inside of wet solar cell 1. Seal portion 11 also has the function of absorbing stress or impact exerted on conductive support 4. Moreover, seal portion 11 has the function of absorbing warp or the like occurring to conductive support 4 during a long-term use of wet solar cell 1.

As the material forming seal portion 11, silicon resin, epoxy resin, polyisobutylene-based resin, hot melt resin, glass frit or the like is preferred. Two or more of them may be used to deposit them in two or more layers. In the case where a nitrile-based solvent or carbonate-based solvent is used as the solvent for the redox electrolyte, the material forming seal portion 11 is preferably, in particular, silicon resin or hot melt resin (ionomer resin for example), polyisobutylene-based resin, or glass frit.

In seal portion 11, opening 12 is formed. This opening 12 can be provided by means of a dispenser, in the case where seal portion 11 is formed using silicon resin, epoxy resin, or glass frit. In the case where seal portion 11 is formed using hot melt resin, the hot melt resin in the form of a sheet can be patterned with a hole formed therein to provide opening 12.

### Opening 12

Opening 12 is an inlet for charging wet solar cell 1 with the electrolytic solution which is carrier transport portion 8. In the present embodiment, at least one opening 12 is provided at a position communicating with the void between insulating frame 10 and photoelectric conversion portion 5. Further, regarding the position of opening 12, opening 12 is preferably formed on the opposite side to the side where the light-receiving surface is located.

### Wet Solar Cell Module

The wet solar cell module in the present embodiment includes at least one wet solar cell 1 of the present embodiment, and the module is constituted of wet solar cells connected in series. Namely, at least one of two or more wet solar cells constituting the wet solar cell module may be wet solar cell 1 of the present embodiment.

Regarding the above-described wet solar cell 1 and wet solar cell module, the void between insulating frame 10 and photoelectric conversion portion 5 and the void between insulating frame 10 and second electrode 9 communicate with the gap formed between second electrode 9 and seal portion 11. Therefore, when the cell is to be filled with carrier transport portion 8, the voids and the gap serve as a flow path for air, and accordingly, the pressure of the inside of wet solar cell 1 can easily be reduced.

Further, when the cell is to be filled with carrier transport portion 8, the voids and the gap serve as a flow path for carrier transport portion 8, and accordingly, the inside of wet solar cell 1 can easily be filled with carrier transport portion 8. In this way, for wet solar cell 1 having a large area, the inside of wet solar cell 1 can sufficiently be filled with carrier transport portion 8 in a short time.

Furthermore, regarding above-described wet solar cell 1, photoelectric conversion portion 5 and second electrode 9 are formed on the same substrate 2, and therefore, when wet solar cell 1 is to be sealed with seal portion 11, the inside of wet solar cell 1 can sufficiently be filled with carrier transport portion 8 while respective positions of photoelectric conversion portion 5 and second electrode 9 are maintained relative to each other. The photovoltaic performance of wet solar cell 1 can thus be improved.

### Example Experiment 1

For a conventional wet solar cell, the relation between the time spent for reduction of the pressure in the wet solar cell and the conversion efficiency of the wet solar cell was confirmed. In the following, how an experiment here was carried out will be described.

The wet solar cell shown in Fig. 13 that is a constituent component of the monolithic dye-sensitized solar cell module was fabricated. A conductive glass substrate (manufactured by Nippon Sheet Glass Co., Ltd., trade name: SnO₂ coated glass, 1510 mm in length × 15 mm in width) was prepared. On the top surface of this conductive glass substrate, a titanium oxide paste (manufactured by Solaronix SA., trade name: Ti-Nanoxide D/SP) was deposited by means of a screen printing machine (LS-150 manufactured by Newlong Seimitsu Kogyo Co., Ltd.) so that the shape after firing has a size of 1500 mm in length × 5 mm in width × 13 µm in thickness.

After this, at a temperature of 500°C, the conductive glass substrate was fired for 60 minutes to form a porous semiconductor layer. Then, on the porous semiconductor layer, a paste containing zirconia particles having an average particle size of 50 nm was deposited with the above-described screen printing machine. This conductive glass substrate was fired at a temperature of 500°C for 60 minutes to form a porous insulating portion whose flat portion had a thickness of 7 µm. As the catalyst layer, a Pt film having a thickness of 50 nm was formed and, as the second electrode, a Ti film having a thickness of 300 nm was formed, both using an electron beam vapor deposition machine.

A ruthenium dye (manufactured by Solaronix, trade name: Ruthenium 620-1H3TBA) having the chemical formula shown in Fig. 4 was dissolved in a solvent prepared by mixing acetonitrile and 1-butanol at a volume ratio of 1:1 so that the concentration was 4×10⁻⁴ mol/l to thereby prepare a dye solution for adsorption.

In this dye solution for adsorption, the above-described conductive glass substrate having the porous semiconductor layer was immersed to cause the dye to be adsorbed on the porous semiconductor layer (titanium oxide film). After this, the conductive glass substrate removed from the dye solution for adsorption was washed with ethanol (manufactured by Aldrich Chemical Company) and dried to form a photoelectric conversion portion.

Then, a photosensitive resin (31X-101 manufactured by ThreeBond Co., Ltd.) was applied with a dispenser (ULTRASAVER manufactured by EFD) to cover the top surface of the conductive glass substrate on which the above-described layer stack was formed. After the seal portion was bonded to the photosensitive resin, an UV lamp (NOVACURE manufactured by EFD) was used to irradiate the conductive glass substrate with UV radiation to thereby harden the photosensitive resin. At this time, the distance between the second electrode and the seal portion was set to 5 µm and the photosensitive resin was formed without gap in the space between the conductive glass substrate and the seal portion.

Through an electrolytic solution inlet formed in the seal portion, the pressure in the wet solar cell was reduced in four different pressure reduction times of 30, 120, 450, and 1800 seconds. After this, an electrolytic solution was injected utilizing the capillary effect. After the electrolytic solution was injected, the electrolytic solution inlet was sealed with a photosensitive resin to thereby fabricate the wet solar cell.

The electrolytic solution used as the carrier transport portion was prepared by dissolving, in acetonitrile (manufactured by Aldrich Chemical Company), 0.1 mol/l in concentration of lithium iodide (manufactured by Aldrich Chemical Company), 0.01 mol/l in concentration of iodine (manufactured by Aldrich Chemical Company), 0.5 mol/l in concentration of TBP (manufactured by Aldrich Chemical Company), and 0.6 mol/I in concentration of dimethylpropyl imidazole iodide (manufactured by Shikoku Chemicals Corporation).

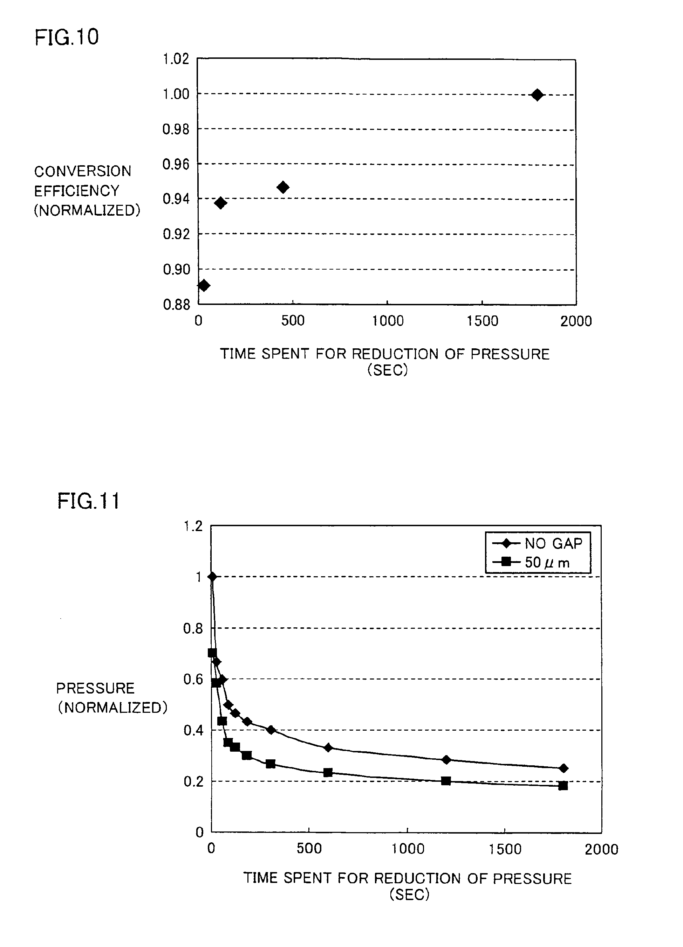

Fig. 10 is a graph showing a relation between the time spent for reduction of the pressure in the wet solar cell and the conversion efficiency of the wet solar cell in Example Experiment 1. In Fig. 10, the vertical axis represents the conversion efficiency of the wet solar cell and the horizontal axis represents the time spent for reduction of the pressure in the wet solar cell. Here, the wet solar cell was irradiated with artificial solar light having AM (Air Mass) of 1.5 and an irradiation intensity of 100 mW/cm² to confirm the conversion efficiency.

As shown in Fig. 10, a longer time spent for reduction of the pressure in the wet solar cell is accompanied by a higher conversion efficiency of the wet solar cell. This is for the reason that the increased pressure reduction time enables the pressure in minute portions of the porous body in the wet solar cell to be reduced, and consequently, when the inside of the wet solar cell is to be filled with the electrolytic solution, the electrolytic solution spreads over the minute portions of the porous body.

### Example Experiment 2

For a wet solar cell like the wet solar cell of the present embodiment in which a gap is formed between the seal portion and the second electrode and a conventional wet solar cell in which no gap is formed between the seal portion and the second electrode, it was confirmed how the pressure in the wet solar cell changes depending on the time spent for reduction of the pressure in the wet solar cell.

As the wet solar cell in which no gap is formed between the seal portion and the second electrode, the wet solar cell fabricated in Example Experiment 1 was used. For the wet solar cell in which a gap is formed between the seal portion and the second electrode, the top surface of the second electrode was screen-printed with glass frit so that the pattern shown in Fig. 5 is formed. The width of the gap formed between the top surface of the second electrode and the seal portion was set to 50 µm.

Fig. 11 is a graph showing a relation between the time spent for reduction of the pressure in the wet solar cell and the pressure in the wet solar cell in Example Experiment 2. In Fig. 11, the vertical axis represents the normalized pressure in the wet solar cell and the horizontal axis represents the time spent for reduction of the pressure in the wet solar cell. The pressure in the wet solar cell is indicated by a relative pressure, supposing that the pressure is one when the time spent for reduction of the pressure in the wet solar cell is zero. Here, the pressure in the wet solar cell was confirmed with a Pirani gauge connected to the inside of the wet solar cell.

As shown in Fig. 11, in the case where a gap is formed between the second electrode and the seal portion, the pressure in the wet solar cell can be reduced in a shorter time. This is for the reason that this gap functions as a flow path for air.

From the result above, protrusions and depressions can be formed on the top surface of the second electrode or a spacer can be formed on the top surface of the second electrode to provide a gap between the second electrode and the seal portion, and thereby reduce the pressure in the wet solar cell in a short time. As shown in Fig. 10, in the wet solar cell with the pressure sufficiently reduced, penetration of the electrolytic solution is facilitated and a high conversion efficiency is achieved. Thus, a gap can be provided between the second electrode and the seal portion to facilitate improvement of the conversion efficiency of the wet solar cell.

In the case where protrusions and depressions are formed on the top surface of the second electrode, the protrusions and depressions may be formed on the whole top surface of the second electrode or a part of the top surface thereof. In the case where a spacer is formed on the top surface of the second electrode, the spacer may be formed on the whole top surface of the second electrode or a part of the top surface thereof. Further, the pattern of the spacer can be changed as appropriate.

In the case where protrusions and depressions are formed on the top surface of the second electrode, in order to secure a gap through which the electrolytic solution can easily be injected in the wet solar cell, surface roughness Ra of the top surface of the second electrode is preferably 0.01 µm or more. More preferably, surface roughness Ra of the top surface of the second electrode is not less than 0.01 µm and not more than 10 µm. In this case, as shown in Fig. 9, the particle size of the material which forms the porous insulation portion can be selected to easily form protrusions and depressions on the top surface of the second electrode.

The present invention is a technique for facilitating reduction of the pressure in the wet solar cell as well as injection of an electrolytic solution into the wet solar cell. Therefore, the method for manufacturing a wet solar cell described in connection with the embodiment is given by way of example. The present invention encompasses even a wet solar cell produced by another method as long as a gap is formed to facilitate reduction of the pressure in the wet solar cell and injection of an electrolytic solution into the wet solar cell.

It should be construed that embodiments disclosed herein are by way of illustration in all respects, not by way of limitation. It is intended that the scope of the present invention is defined by claims, not by the above description of the embodiments, and encompasses all modifications and variations equivalent in meaning and scope to the claims.

### REFERENCE SIGNS LIST

1 wet solar cell; 2 substrate; 3 first electrode; 4 conductive support; 5 photoelectric conversion portion; 6 porous insulating portion; 7 catalyst portion; 8 carrier transport portion; 9 second electrode; 10 insulating frame; 11 seal portion; 12 opening; 13 spacer; 14 solar light; 21, 22, 31 glass substrate; 23, 35 counter electrode; 24, 33 photoelectric conversion portion; 25, 32 transparent conducting film; 26 carrier transport portion; 27 insulating protection; 28 conductive connecting portion; 34 porous insulating portion; 36 insulating portion; 37 insulating top cover

## Claims

1. A wet solar cell (1) comprising:
a substrate (2) having a light-receiving surface;
a seal portion (11) disposed opposite to said substrate (2);
a first electrode (3) formed on a top surface of a side of said substrate (2) that is opposite to said seal portion (11);
an insulating frame (10) disposed between said first electrode (3) and said seal portion (11) to surround four sides so that a space is formed inside the insulating frame;
a photoelectric conversion portion (5) formed on a top surface of said first electrode (3) and spaced from said insulating frame (10) in said space;
a second electrode (9) formed in said space to extend toward said seal portion (11) from a top surface of another first electrode (3) adjacent to said first electrode (3), and having a top surface partially located opposite to said seal portion (11); and
a porous insulating portion (6) disposed between said photoelectric conversion portion (5) and said second electrode (9) to provide electrical insulation between said photoelectric conversion portion (5) and said second electrode (9) and between said first electrodes (3) adjacent to each other,
in said space, a gap communicating with a portion between said insulating frame (10) and said photoelectric conversion portion (5) being formed between said second electrode (9) and said seal portion (11), and
the inside of said space including said gap being filled with a carrier transport portion (8).

2. The wet solar cell according to claim 1, wherein said gap is formed by protrusions and depressions on a top surface of said second electrode (9).

3. The wet solar cell according to claim 1, wherein said gap is formed by a spacer (13) formed on a top surface of said second electrode (9).

4. The wet solar cell according to claim 3, wherein said spacer (13) is made up of a pattern of a plurality of linear portions, as seen in a plan view, formed on the top surface of said second electrode (9).

5. The wet solar cell according to claim 3, wherein said spacer (13) is made up of a pattern of a plurality of dots, as seen in a plan view, formed on the top surface of said second electrode (9).

6. The wet solar cell according to claim 3, wherein said spacer (13) is made up of a pattern of rectangles, as seen in a plan view, formed at predetermined intervals on the top surface of said second electrode (9).

7. The wet solar cell according to claim 2, wherein said protrusions and depressions are formed of a single fine particle or a collection of fine particles.

8. A wet solar cell module in which a plurality of wet solar cells including the wet solar cell recited in any of claims 1 to 7 are connected to each other.
